# FASCICULE DE BREVET EUROPEEN

(11) **EP 1 547 364 B1**
(45) Date de publication et mention de la délivrance du brevet: **25.04.2012**
(21) Numéro de dépôt: 03775470.2
(22) Date de dépôt: 03.10.2003
(51) Int. Cl.: H04N 1/00, H04N 7/167, H04N 21/462, H04N 21/2343, H04N 21/254, H04N 21/63, H04N 21/2347, H04N 21/4405, H04N 21/4402

(54) **DESEMBROUILLAGE ADAPTATIF ET PROGRESSIF DE FLUX VIDEO**
ADAPTIVE UND PROGRESSIVE ENTSCHLÜSSELUNG EINES VIDEOSTROMS
ADAPTIVE AND PROGRESSIVE VIDEO STREAM SCRAMBLING

(30) Priorité: 03.10.2002 FR 0212271
(43) Date de publication de la demande: 29.06.2005
(73) Titulaire: NAGRA FRANCE SAS, 75015 Paris (FR)
(72) Inventeur: LECOMTE, Daniel, F-75116 Paris (FR); Parayre-Mitzova, Daniela, F-75018 Paris (FR); GEORGES, Sébastien, F-75005 Paris (FR)
(74) Mandataire: Leman Consulting S.A.
(86) Numéro de dépôt international: PCT/FR2003/002915
(87) Numéro de publication internationale: WO 2004/032478

(56) Documents cités:
- EP-A- 1 033 880
- US-A1- 2002 018 565
- KUNKELMANN T ET AL: "VIDEO ENCRYPTION BASED ON DATA PARTITIONING AND SCALABLE CODING - A COMPARISON" INTERACTIVE DISTRIBUTED MULTIMEDIA SYSTEMS AND TELECOMMUNICATION SERVICES, XX, XX, 8 septembre 1998 (1998-09-08), pages 95-106, XP000997705

## Description

La présente invention se rapporte au domaine du traitement de flux vidéo numériques.

On se propose dans la présente invention de fournir un système permettant d'embrouiller visuellement et de recomposer un contenu vidéo numérique.

La présente invention se rapporte plus particulièrement à un dispositif capable de transmettre de façon sécurisée un ensemble de films de haute qualité visuelle vers un écran de télévision et/ou pour être enregistré sur le disque dur d'un boîtier reliant le réseau de télétransmission à l'écran de visualisation tel qu'un téléviseur ou un moniteur d'ordinateur personnel, tout en préservant la qualité audiovisuelle mais en évitant toute utilisation frauduleuse comme la possibilité de faire des copies pirates de films ou de programmes audiovisuels enregistrés sur le disque dur du boîtier décodeur.

L'invention concerne un procédé pour la distribution de séquences vidéos numériques selon un format de flux nominal constitué par une succession de trames comprenant chacune au moins un bloc numérique regroupant un certain nombre de coefficients correspondant à des éléments vidéos simples codés numériquement selon un mode précisé à l'intérieur du flux concerné et utilisé par tous les décodeurs vidéos capables de l'afficher afin de pouvoir la décoder correctement. Ce procédé comporte :
- une étape préparatoire consistant à modifier au moins un desdits coefficients,
- une étape de transmission
   - d'un flux principal conforme au format nominal, constitué par des plans contenant les blocs modifiés au cours de l'étape préparatoire et
   - par une voie séparée dudit flux principal d'une information numérique complémentaire permettant de reconstituer le flux original à partir du calcul, sur l'équipement destinataire, en fonction dudit flux principal et de ladite information complémentaire. On définit ladite information complémentaire en tant qu'un ensemble constitué de données (par exemples des coefficients décrivant le flux numérique originel ou extraits du flux originel) et de fonctions (par exemple, la fonction substitution ou permutation). Une fonction est définie comme contenant au moins une instruction mettant en rapport des données et des opérateurs. Ladite information complémentaire décrit les opérations à effectuer pour récupérer le flux original à partir du flux modifié.

L'art antérieur connaît déjà par la demande de brevet français WO 01/97520 « Dispositif d'interfaçage vidéo, système de distribution et méthode de transfert de programmes et de séquences vidéo encodées à travers le réseau de communication » un dispositif pour la diffusion sécurisée, l'accès conditionnel, la visualisation contrôlée, la copie privée, le stockage chez les destinataires de flux vidéo protégés. Cette invention concerne un agencement d'interfaçage vidéo pour relier au moins un dispositif d'affichage à au moins une source vidéo, constitué essentiellement, d'une part, d'une unité de traitement programmée et adaptée de gestion, plus spécialement pour décoder et désembrouiller un type quelconque de flux vidéo, en correspondance avec un programme prédéfini de désembrouillage dans le but de décoder la séquence vidéo, de l'afficher en temps réel ou en différé, de la stocker, de l'enregistrer et/ou de l'envoyer à travers le réseau de télécommunication, et d'autre part, au moins une interface écran, au moins une unité de stockage, une interface réseau local, une interface utilisateur et une interface de contrôle, lesdites interfaces étant reliées et pilotées par une unité de contrôle, intégrée chez le destinataire.

Dans la présente invention, on entend sous le terme « embrouillage » la modification d'un flux vidéo numérique par des méthodes appropriées de manière à ce que ce flux reste conforme à la norme ou au standard avec laquelle il a été encodé numériquement, tout en le rendant visualisable par un lecteur (ou visionneur ou afficheur ou player), mais altéré du point de vue de la perception visuelle humaine.

Dans la présente invention, on entend sous le terme « désembrouillage » le processus de restitution par des méthodes appropriées du flux initial, le flux vidéo restitué après le désembrouillage étant identique au flux vidéo originel initial. La reconstitution du flux originel s'effectue sur l'équipement destinataire à partir du flux principal modifié déjà présent ou envoyé en temps réel sur l'équipement destinataire et de l'information complémentaire envoyée en temps réel comprenant des données et des fonctions exécutées à l'aide de routines (ensemble d' instructions) numériques.

On entend par « profil » de l'utilisateur, un fichier numérique comprenant des descripteurs et informations spécifiques à l'utilisateur, par exemple ses préférences culturelles et ses caractéristiques sociales et culturelles, ses habitudes d'utilisation telles que la périodicité de l'utilisation des moyens vidéos, la durée moyenne de la visualisation d'un film embrouillé, la fréquence de visualisation d'une séquence embrouillée, ou tout autre caractéristique comportementale au regard de l'exploitation de films et séquences vidéos. Ce profil se formalise par un fichier numérique ou une table numérique exploitable par des moyens informatiques.

Beaucoup de systèmes d'embrouillage ont un effet immédiat, soit le flux initial est totalement embrouillé, soit le flux initial n'est pas du tout embrouillé, et de même pour les systèmes de désembrouillage du contenu vidéo. Avec des systèmes rigides de ce type, il est difficile de satisfaire les exigences des systèmes client-serveur multi-utilisateurs, multi-applications et multi-services c'est-à-dire adapter les services en fonction des différents utilisateurs et de leurs droits.

Le document US 2002/ 018565A, selon lequel le préambule de la revendication 1 est rédigé, se rapporte à un procédé de protection de contenu audiovisuel qui consiste à embrouiller un contenu audiovisuel tout en gardant son format d'origine en appliquant un chiffrement des positions des vecteurs de mouvement compressés dans le flux protégé, le flux d'origine étant reconstitué à partir du flux protégé selon l'invention par les utilisateurs ayant accès a la clé permettant le déchiffrement desdites positions.

Toutefois, cette demande préserve le même désavantage présenté ci-dessus, car une fois l'utilisateur ayant accès à la clé permettant le déchiffrement des positions des vecteurs de mouvement compressés, il est capable à récupérer l'intégralité du flux d'origine.

La demande EP1033880 se rapporte à un procédé de protection de contenu audiovisuel qui consiste à embrouiller un contenu audiovisuel tout en gardant son format d'origine en appliquant un chiffrement/permutation des positions des vecteurs de mouvement et des coefficients DCT non-compressés ou un changement du bit de signe des vecteurs de mouvement et des coefficients DCT non-compressés, le flux d'origine étant reconstitué à partir du flux protégé selon l'invention par les utilisateurs ayant accès à la clé permettant le déchiffrement/permutation desdites positions ou desdites bits de signe.

Pourtant, cette demande préserve le même désavantage que la demande US 2002/ 018565A, car une fois l'utilisateur ayant accès à la clé permettant le déchiffrement/permutation desdites positions ou desdites bits de signe, il est capable a récupérer l'intégralité du flux d'origine.

La présente invention entend remédier aux inconvénients de l'art antérieur en proposant un système de désembrouillage adaptatif et progressif du contenu visualisé en fonction du profil et des droits du spectateur.

Dans la présente invention, on applique un désembrouillage adaptatif et progressif du contenu visualisé en fonction du profil et des droits de chaque spectateur. Le serveur envoie uniquement les parties de ladite information complémentaire, qui a une structure se caractérisant par une « scalabilité granulaire » pour fournir au spectateur un contenu plus ou moins embrouillé en fonction de certains critères, profils et droits. On définit la notion « scalabilité » à partir du mot anglais « scalability » qui caractérise un encodeur capable d'encoder ou un décodeur capable de décoder un ensemble ordonné de flux binaires de façon à produire ou reconstituer une séquence multi couches. On définit la granularité comme la quantité d'informations susceptible d'être transmise par couche d'un système caractérisé par une scalabilité quelconque, le système est alors aussi granulaire. La granularité est relative au degré de l'embrouillage. Le flux vidéo est complètement embrouillé, une seule fois pour tous les spectateurs. Ensuite, le serveur envoie tout ou partie de ladite information complémentaire, de manière à ce que le flux apparaisse plus ou moins brouillé chez le spectateur. Le contenu envoyé de ladite information complémentaire et le contenu visualisé sur l'écran de visualisation du spectateur sont fonction de chaque spectateur et le serveur gère et effectue l'envoi en temps réel au moment de la visualisation par chaque spectateur.

L'invention concerne un procédé selon la revendication 1.

De préférence, ladite modification produit un flux principal modifié et une information complémentaire permettant la reconstruction du flux originel par un désembrouilleur, le procédé comportant une étape de transmission du flux modifié, et comportant en outre une étape de transmission à l'équipement destinataire d'un sous-ensemble de ladite information complémentaire de modification, ledit sous-ensemble étant déterminé en fonction d'informations provenant d'un profil numérique du destinataire.

Selon une variante, le flux principal modifié est enregistré sur l'équipement destinataire préalablement à la transmission de l'information complémentaire sur l'équipement destinataire.

Selon une autre variante, le flux principal modifié et l'information complémentaire sont transmis ensemble en temps réel.

Avantageusement, la détermination dudit sous-ensemble est réalisée par une méthode de scalabilité granulaire, la quantité d'informations contenues dans le ledit sous-ensemble correspond à un niveau de scalabilité déterminé en fonction du profil du destinataire.

Selon une variante, le type d'informations contenues dans le ledit sous-ensemble correspond à un niveau de scalabilité déterminé en fonction du profil du destinataire.

Selon un mode de mise en oeuvre particulier, ladite information complémentaire de modification comprend au moins une routine numérique apte à exécuter une fonction.

De préférence, lesdites fonctions sont personnalisées pour chaque destinataire en fonction de la session de connexion.

Avantageusement, ladite information complémentaire est subdivisée en au moins deux sous-parties.

Selon une variante, lesdites sous-parties de l'information complémentaire peuvent être distribuées par différents médias.

Selon une autre variante, lesdites sous-parties de l'information complémentaire peuvent être distribuées par le même média.

Selon un mode de mise en oeuvre particulier, l'information complémentaire est transmise sur un vecteur physique.

Selon une variante, l'information complémentaire est transmise en ligne.

Avantageusement, lesdites images numériques sont des images I, ou P, ou B, ou plans S.

Selon un mode de mise en oeuvre particulier, lesdites images numériques utilisent les technologies à base d'ondelettes.

Selon une autre variante, le format de flux vidéo nominal est défini par la norme MPEG-1 ou MPEG-2 ou MPEG-4.

De préférence, une partie au moins dudit profil est stocké sur un équipement du destinataire.

Avantageusement, le type d'informations contenues dans ledit sous-ensemble est mis à jour en fonction du comportement dudit destinataire pendant la connexion au serveur, ou en fonction de ses habitudes, ou en fonction de données communiquées par un tiers.

Selon une variante, le procédé comporte une étape préalable de conversion analogique/numérique sous un format structuré, le procédé étant appliqué à un signal vidéo analogique.

La présente invention se rapporte également à un système pour la distribution de séquences vidéos comportant un serveur comprenant des moyens pour diffuser un flux modifié conformément au procédé décrit précédemment et une pluralité d'équipements munis d'un circuit de désembrouillage, caractérisé en ce que le serveur comprend en outre un moyen d'enregistrement du profil numérique de chaque destinataire et un moyen d'analyse du profil de chacun des destinataires d'un flux modifié, ledit moyen commandant la nature de l'information complémentaire transmise à chacun desdits destinataires analysés.

Selon une variante, le niveau (qualité, quantité, type) d'information complémentaire est déterminé pour chaque destinataire en fonction de l'état de son profil au moment de la visualisation du flux principal.

On comprendra mieux l'invention à l'aide de la description, faite ci-après à titre purement explicatif, d'un mode de réalisation de l'invention, en référence à la figure annexée :

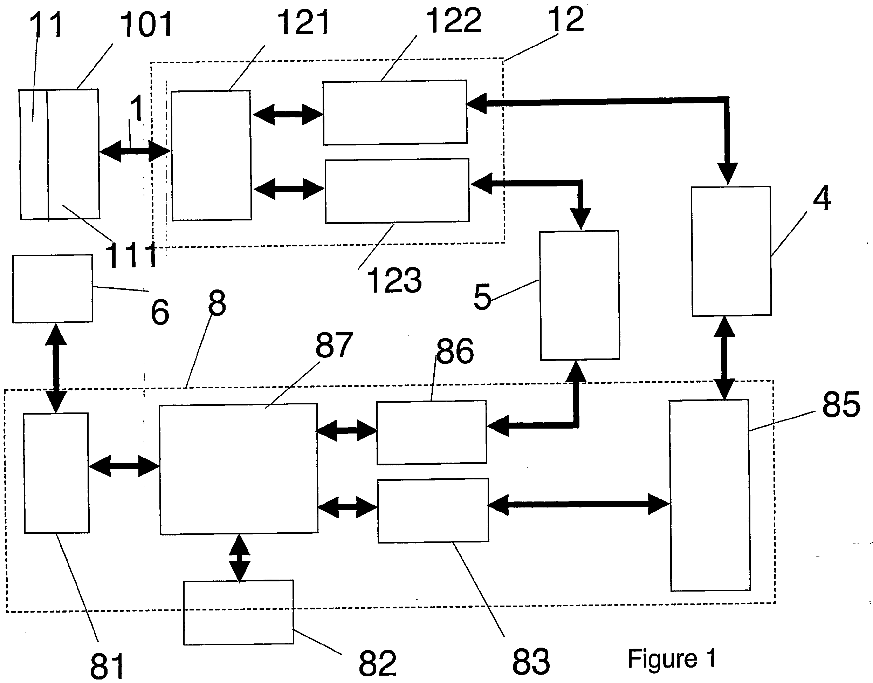

la figure 1 illustre un mode de réalisation particulier du système client-serveur conforme à l'invention.

Un flux vidéo numérique est généralement constitué de séquences d'images, regroupées en groupes d'images « Groups Of Pictures ») (GOPs). Une image peut être de type I (Intra), P (Prédite), B (Bidirectionnelle). Un plan S est un plan contenant un objet statique, qui est une image fixe décrivant le fond de l'image ou bien un plan codé en utilisant une prédiction basée sur la compensation de mouvement globale (GMC) à partir d'un plan de référence, antérieur. Les images I sont les images de référence, elles sont entièrement codées et sont donc de taille élevée et ne contiennent pas d'information sur le mouvement. Les plans P sont des plans prédits à partir de plans précédents, que ce soit I et/ou P par des vecteurs de mouvement dans une seule direction, dite en avant « forward ». Les plans B sont dits bidirectionnels, ils sont liés aux plans I et/ou P les précédant ou les suivant par des vecteurs de mouvement dans les deux directions temporelles (en avant et en arrière ou « backward »). Les vecteurs de mouvement représentent des vecteurs bidimensionnels utilisés pour la compensation de mouvements, qui procurent la différence de coordonnées entre une partie de l'image courante et une partie de l'image de référence.Les images numériques peuvent également être obtenues à l'aide de technologies se basant sur les ondelettes (par exemple les images fixes dans la norme MPEG-4), le concept des ondelettes étant un schéma itératif c'est-à-dire la répétition sans fin d'une même opération à des échelles de plus en plus petites, principe qui se caractérise bien par une scalabilité granulaire.

On définit comme quantité d'informations contenues dans ledit sous ensemble le nombre de données et/ou des fonctions appartenant à l'information complémentaire envoyée au destinataire pendant la connexion.

Le type d'informations contenues dans le ledit sous-ensemble, correspond à un niveau de scalabilité déterminé en fonction du profil du destinataire. On définit comme type la nature des données et/ou fonctions appartenant à l'information complémentaire envoyée au destinataire pendant la connexion. Par exemple, le type de données est relatif aux habitudes du destinataire (heure de connexion, durée de la connexion, régularité de la connexion et des paiements), de son environnement (habite une grande ville, le temps qu'il fait en ce moment) et à ses caractéristiques (âge, sexe, religion, communauté).

Ladite information complémentaire est composée au moins de fonctions, qui sont personnalisées pour chaque destinataire par rapport à la session de connexion. On définit une session à partir de l'heure de connexion, la durée, le type dudit premier flux visualisé et les éléments connectés (destinataires, serveurs).

Ladite information complémentaire est subdivisée en au moins deux sous-parties, chacune des sous-parties pouvant être distribuée par différents médias, ou par le même média. Par exemple, dans le cas de distribution de l'information complémentaire par plusieurs médias, on peut assurer une gestion plus complexe des droits des destinataires.

Considérons un exemple de réalisation.

Notre solution peut par exemple, et de façon non limitative, s'appliquer sur des flux de type MPEG-2. Un flux MPEG-2 est composé de séquences, chaque séquence étant divisée en groupes d'images, eux-mêmes composés d'images I, P, B. Une image comprend un certain nombre de sous structures nommées tranches ou « slices ». Une slice est une succession de macroblocs. Un macrobloc est un rassemblement de blocs (4 de luminance, et 2 de chrominance, par exemple, pour le format 4:2:0), représentant un carré de taille 64*64 pixels sur l'image décodée. Un bloc contient l'information correspondant à un carré de 8*8 pixels sur l'image codée dans l'une des composantes de l'image (luminance Y, ou chrominance Cb ou Cr).

Lors de l'encodage d'un flux au format MPEG-2, l'image (qu'elle soit de référence ou obtenue en utilisant une compensation de mouvement) est décomposée selon ses trois composantes (Y, Cb et Cr). Chacune des trois sous-images ainsi obtenues est alors divisée en blocs (hiérarchisés en slices, macroblocs, images, etc...). Ces blocs subissent plusieurs traitements avant d'être insérés dans le flux MPEG-2. Pour commencer, on les fait passer dans le domaine fréquentiel en leur appliquant une fonction appelée DCT (Discrete Cosine Transform) qui est un algorithme classique de transposition de l'information du domaine spatial vers le domaine fréquentiel. Suite à cette transformation, les coefficients situés en haut à gauche du bloc nouvellement obtenu correspondent aux fréquences les plus faibles dans les deux dimensions, alors que ceux obtenus en bas à droite, aux fréquences les plus élevées.

Un traitement suivant consiste à quantifier ces coefficients de façon à réduire l'information correspondant aux très hautes fréquences pour lesquelles l'oeil humain est peu sensible.

Le coefficient situé en haut à gauche de la matrice obtenue après quantification, appelé coefficient DC, qui correspond à la composante continue du bloc, c'est-à-dire la valeur moyenne des pixels du bloc, est alors stocké dans le flux MPEG-2 en optimisant la taille binaire qu'il occupe grâce à un traitement différentiel et un codage à longueur variable. Lors du décodage d'un coefficient DC, une première valeur est obtenue à partir des données présentes dans un bloc, puis cette valeur est ajoutée à une valeur de prédiction de façon à retrouver la valeur réelle. A chaque fois qu'un coefficient DC est décodé, la valeur de prédiction est mise à jour avec la valeur ainsi générée. Les autres coefficients (63 au total) appelés AC sont alors mis les uns à la suite des autres (sous forme de vecteur) de façon à ce que le vecteur obtenu contienne le plus grand nombre de valeurs nulles consécutives possibles afin de lui appliquer un codage de type couples de niveau ou « Run Level ». Ce type de codage consiste à coder le vecteur sous la forme d'une série de couples de « run-level », le « run » correspondant au nombre de valeurs nulles qui précèdent la valeur niveau (« level ») dans le vecteur. Ainsi, plus un vecteur comporte de valeurs nulles successives, plus ce type de codage est efficace.

Notre invention peut consister par exemple, mais de façon non limitative, à modifier pour un flux MPEG-2 la valeur de certains champs, notamment les coefficients DC et/ou AC et/ou des vecteurs de mouvement, et cela que ce soit pour un ou plusieurs blocs, macroblocs, slice, et aussi que ce soit pour une ou toutes les composantes colorimétriques Y, Cb, Cr, ou autres éléments quelconques du flux structuré de façon à obtenir un flux MPEG-2 parfaitement conforme à la norme mais dont la qualité visuelle est dégradée, et de stocker, dans une information complémentaire, organisée en différentes couches de scalabilité, les informations nécessaires à un décodeur pour reconstituer des parties du flux d'origine ou l'intégralité du flux. Par exemple, on peut modifier ou substituer les valeurs des coefficients DC et AC des plans I, les DC des blocs Intra dans les plans P et les vecteurs de mouvements entre les plans I, P et B. Lorsque l'application du serveur décide de ne pas désembrouiller totalement le flux à afficher pour un spectateur donné ou lorsque les droits d'un spectateur ne sont pas suffisants pour que le serveur lui envoie l'intégralité de l'information complémentaire, le serveur peut par exemple restituer uniquement les vraies valeurs des coefficients AC des plans I et les DC des blocs Intra dans les plans P, mais pas le reste des informations modifiées.

Sur le dessin en annexe, la figure 1 représente un mode de réalisation préféré particulier du système client-serveur conforme à l'invention.

Le flux d'origine (101) peut être directement sous forme numérique (111) ou sous forme analogique (11). Dans ce dernier cas, le flux analogique (11) est converti par un codeur non représenté en un format numérique (111). Dans la suite du texte, nous noterons (1) le flux numérique vidéo d'entrée. Le flux MPEG-2 que l'on souhaite sécuriser (1) est passé à un système d'analyse et d'embrouillage (121) qui va générer un flux principal modifié (122) au format MPEG-2, identique au flux d'entrée (1) en dehors de ce que certains des coefficients ont été remplacés par des valeurs différentes de celles d'origine, et est placé dans une mémoire tampon de sortie (122). L'information complémentaire (123), de format quelconque, contient des informations relatives aux éléments des images qui ont été modifiés, remplacés, substitués ou déplacés, et leur valeur ou emplacement dans le flux original.

Le flux au format MPEG-2 (122) est ensuite transmis, via un réseau haut débit (4) de type hertzien, câble, satellite, etc, au terminal du spectateur (8), et plus précisément sur son disque dur (85). Lorsque le spectateur (8) fait la demande de visionnage du film présent sur son disque dur (85), deux éventualités sont possibles : soit le spectateur (8) ne possède pas tous les droits nécessaires pour voir le film, dans ce cas, le flux MPEG-2 (122) généré par le système d'embrouillage (121) présent sur le disque dur (85) est passé au système de synthèse (87), via une mémoire tampon de lecture (83), qui ne le modifie pas et le transmet à l'identique à un lecteur afficheur MPEG-2 classique (81) et son contenu, dégradé visuellement par le système d'embrouillage (121), est affiché sur l'écran de visualisation (6).

Soit le serveur décide que le spectateur (8) possède les droits pour voir le film, ce qui peut être testé à l'aide d'un système à base de carte à puce (82) lié au système de synthèse (87). Dans ce cas, le système de synthèse fait une demande de visionnage au serveur (12) contenant l'information nécessaire (123) à la récupération de la vidéo originale (101). Le serveur (12) envoie alors via des réseaux de télécommunication type ligne téléphonique analogique ou numérique, DSL (Digital Subscriber Line) ou BLR (Boucle Locale Radio), via des réseaux DAB (Digital Audio Broadcasting) ou via des réseaux de télécommunications mobiles numériques (GSM, GPRS, UMTS) (5) l'information complémentaire permettant la reconstitution de la vidéo (123) de façon à ce que le spectateur (8) puisse la stocker dans une mémoire tampon (86). Le système de synthèse (87) procède alors à la restauration, dans le flux MPEG-2 brouillé qu'il lit dans sa mémoire tampon de lecture (83), des champs modifiés dont il connaît les positions ainsi que les valeurs d'origine grâce au contenu de l'information complémentaire lue dans la mémoire tampon (86) de désembrouillage de la vidéo. La quantité d'informations contenue dans l'information complémentaire (123) qui est envoyée au système de désembrouillage est spécifique, adaptative et progressive pour chaque spectateur et dépend de ses droits, par exemple utilisation unique ou multiples, droit de faire une ou plusieurs copies privées, retard ou anticipation de paiement.

Le niveau (qualité, quantité, type) de l'information complémentaire est déterminé en fonction de chaque destinataire, en fonction de l'état de son profil au moment de la transmission du flux principal et une partie au moins dudit profil est stockée sur un équipement destinataire. Par exemple, sur la figure 1, une partie du profil du spectateur est enregistrée sur la carte à puce (82) liée au système de synthèse (87), comme par exemple la fréquence des connexions ou la régularité des paiements. Le reste du profil peut se trouver sur le serveur, comme par exemple le genre de films vidéos que le spectateur préfère.

Un autre exemple de réalisation est la mise à jour du profil du destinataire, qui dépend également du temps de connexion au serveur (référant au comportement), à savoir si le spectateur se connecte régulièrement (référant à ses habitudes) ou mise à jour en fonction de données récupérées auprès d'une base de données consommateurs déjà existante sur un serveur et relatives à ce spectateur.

Un autre exemple de réalisation est que le serveur transmet toute l'information complémentaire au spectateur pendant les premières minutes de visualisation du film, puis, au fil du temps, transmet de moins en moins d'information complémentaire au spectateur de façon à désembrouiller de moins en moins le flux principal, donnant ainsi l'effet au spectateur que son écran devient de plus en plus brouillé. Cette fonctionnalité peut inciter le spectateur à acheter ainsi le film affiché.

Un autre exemple de réalisation est que tout ou partie de l'information complémentaire (123) est transmise au spectateur sur un vecteur physique comme une carte à mémoire ou une carte à puce (82).

## Revendications

1. Procédé de distribution à un destinataire de séquences vidéos numériques sous forme d'un flux décodé, à partir d'un flux originel à un format nominal prédéterminé, ledit flux originel comportant des séquences de données contenant des images numériques, le procédé comprenant les étapes de :
- modification d'une partie au moins desdites séquences de données, l'étape de modification produisant un flux modifié au même format nominal que le flux originel et une information complémentaire comprenant les informations numériques permettant la reconstruction dudit flux originel;
- transmission dudit flux modifié ; et
- construction dudit flux décodé à l'aide d'un décodeur ;
**caractérisé en ce que** :
- ladite information complémentaire est organisée en une pluralité de couches permettant la reconstruction adaptative et progressive dudit flux décodé ;
- ladite étape de construction dudit flux décodé est adaptative et progressive, le flux décodé étant construit à partir du flux modifié en utilisant un sous-ensemble de ladite information complémentaire comprenant au moins une couche de ladite information complémentaire ;
le procédé comprenant une étape consistant à déterminer ledit sous-ensemble de ladite information complémentaire en fonction d'informations provenant d'un profil numérique du destinataire.

2. Procédé de distribution de séquences vidéos numériques selon la revendication 1, **caractérisé en ce que** :
- ladite étape de transmission comprend la transmission au destinataire dudit sous-ensemble de ladite information complémentaire ou de l'intégralité de ladite information complémentaire.

3. Procédé pour la distribution de séquences vidéos numériques selon la revendication 2, **caractérisé en ce que** le flux principal modifié est enregistré sur l'équipement destinataire préalablement à la transmission de l'information complémentaire sur l'équipement destinataire.

4. Procédé pour la distribution de séquences vidéos numériques selon la revendication 2, **caractérisé en ce que** le flux principal modifié et l'information complémentaire sont transmis ensemble en temps réel.

5. Procédé pour la distribution de séquences vidéos numériques selon l'une au moins des revendication 2 à 4, **caractérisé en ce que** la détermination dudit sous-ensemble est réalisé par une méthode de scalabilité granulaire.

6. Procédé pour la distribution de séquences vidéos numériques selon l'une au moins des revendication 2 à 5, **caractérisé en ce que** la quantité d'informations contenues dans le ledit sous-ensemble correspond à un niveau de scalabilité déterminé en fonction du profil du destinataire.

7. Procédé pour la distribution de séquences vidéos numériques selon l'une au moins des revendication 2 à 5, **caractérisé en ce que** le type d'informations contenues dans ledit sous-ensemble correspond à un niveau de scalabilité déterminé en fonction du profil du destinataire.

8. Procédé pour la distribution de séquences vidéos numériques selon l'une quelconque des revendications 2 à 7 précédentes, **caractérisé en ce que** ladite information complémentaire de modification comprend au moins une routine numérique apte à exécuter une fonction.

9. Procédé pour la distribution de séquences vidéos numériques selon la revendication 8, **caractérisé en ce que** lesdites fonctions transmises à chaque destinataire sont personnalisées pour chaque destinataire en fonction de la session.

10. Procédé pour la distribution de séquences vidéos numériques selon l'une quelconque des revendications 2 à 9 précédentes, **caractérisé en ce que** ladite information complémentaire est subdivisée en au moins deux sous-parties.

11. Procédé pour la distribution de séquences vidéos numériques selon la revendication 10, **caractérisé en ce que** lesdites sous-parties de l'information complémentaire peuvent être distribuées par différents médias.

12. Procédé pour la distribution de séquences vidéos numériques selon la revendication 10, **caractérisé en ce que** lesdites sous-parties de l'information complémentaire peuvent être distribuées par le même média.

13. Procédé pour la distribution de séquences vidéos numériques selon l'une au moins des revendications 2 à 12, **caractérisé en ce qu'**au moins une partie de l'information complémentaire est transmise sur un vecteur physique.

14. Procédé pour la distribution de séquences vidéos numériques selon l'une au moins des revendications 2 à 12, **caractérisé en ce que** l'information complémentaire est transmise en ligne.

15. Procédé pour la distribution de séquences vidéos numériques selon l'une des revendications précédentes, **caractérisé en ce que** lesdites images numériques sont des images I, P ou B.

16. Procédé pour la distribution de séquences vidéos numériques selon l'une des revendications précédentes, **caractérisé en ce que** lesdites images numériques utilisent des technologies à base d'ondelettes.

17. Procédé pour la distribution de séquences vidéos numériques selon l'une des revendications précédentes, **caractérisé en ce qu'**une partie au moins dudit profil est stocké sur un équipement du destinataire.

18. Procédé pour la distribution de séquences vidéos numériques selon l'une quelconque des revendications 2 à 15, **caractérisé en ce que** le type d'informations contenues dans ledit sous-ensemble est mis à jour en fonction d'un paramètre choisi parmi le comportement dudit destinataire pendant la connexion au serveur, ses habitudes et des données communiquées par un tiers.

19. Procédé pour la distribution de séquences vidéos numériques selon l'une quelconque des revendications précédentes, **caractérisé en ce qu'**il comporte une étape préalable de conversion analogique/numérique sous un format structuré, le procédé étant appliqué à un signal vidéo analogique.

20. Système pour la distribution de séquences vidéos numériques comportant un serveur comprenant des moyens pour diffuser un flux modifié conformément à la revendication 1, et une pluralité d'équipements munis d'un circuit de désembrouillage, **caractérisé en ce que** le serveur comprend en outre un moyen d'enregistrement du profil numérique de chaque destinataire et un moyen d'analyse du profil de chacun des destinataires d'un flux modifié, ledit moyen commandant la nature de l'information complémentaire transmise à chacun desdits destinataires analysés.

21. Système pour la distribution de séquences vidéos numériques selon la revendication 20, **caractérisé en ce que** le niveau (qualité, quantité, type) de l'information complémentaire est déterminé pour chaque destinataire en fonction de l'état de son profil au moment de la visualisation du flux principal.

## Claims

1. A method of distributing digital video sequences to a recipient in the form of a decoded stream comprising sequences of digital images, comprising:
- a modification step of an original stream by modifying at least a part of the sequences, the modification producing a modified stream of the same nominal format as the original stream and a complementary information comprising the digital information allowing to reconstruct said original stream,
- transmitting the modified stream, and
- reconstructing said modified stream with a decoder,
**characterized in that** :
- said complementary information is organized in a plurality of layer allowing the adaptive and progressive reconstruction of said decoded stream;
- said reconstruction step of said decoded stream is adaptive and progressive, the decoded stream being reconstruct from the decoded stream using a subset of said complementary information comprising at least one layer of said complementary information;
the method comprising a step consisting to determine said subset of said complementary information as a function of information from of a digital profile of the recipient.

2. The method of distributing digital video sequences according to claim 1, **characterized in that** :
- said transmission step comprises the transmission to the recipient of said subset of said complementary information or the integrality of the complementary information.

3. The method of distributing digital video sequences according to claim 2, **characterized in that** the modified main stream is recorded on the recipient device previously to the transmission of the complementary information to the recipient device.

4. The method of distributing digital video sequences according to claim 2, **characterized in that** the modified main stream and the complementary information are transmitted together in real time.

5. The method of distributing digital video sequences according to at least one of the claims 2 to 4, **characterized in that** the determination of the sub-set is made by a granular scalability method.

6. The method of distributing digital video sequences according to at least one of the claims 2 to 5, **characterized in that** the quantity of information contained in the subset corresponds to a scalability level determined in function of the profile of the recipient.

7. The method of distributing digital video sequences according to at least one of the claims 2 to 5, **characterized in that** the type of information contained in the sub-set corresponds to a scalability level determined in function of the profile of the recipient.

8. The method of distributing digital video sequences according to at least one of the claims 2 to 7, **characterized in that** modifying complementary information contains at least one digital routine capable of performing a function.

9. The method of distributing digital video sequences according to the claim 8, **characterized in that** the functions transmitted to each recipient are personalized for each recipient in function of the session.

10. The method of distributing digital video sequences according to at least one of the claims 2 to 9, **characterized in that** the complementary information is subdivided in at least two subsets.

11. The method of distributing digital video sequences according to claim 10, **characterized in that** the subsets of the complementary information can be distributed by different media.

12. The method of distributing digital video sequences according to claim 10, **characterized in that** the subsets of the complementary information can be distributed by the same media.

13. The method of distributing digital video sequences according to at least one of the claims 2 to 12, **characterized in that** all or part of the complementary information is transmitted on a physical means.

14. The method of distributing digital video sequences according to at least one of the claims 2 to 12, **characterized in that** the complementary information is transmitted on line.

15. The method of distributing digital video sequences according to at least one of the preceding claims, **characterized in that** the digital images are images I, or P, or B frames.

16. The method of distributing digital video sequences according to at least one of the preceding claims **characterized in that** the digital images use wavelet-based technologies.

17. The method of distributing digital video sequences according to at least one of the preceding claims **characterized in that** at least one part of the profile is stored on the recipient device.

18. The method of distributing digital video sequences according to at least one of the claims 2 to 15, **characterized in that** the type of information contained in the sub-set is updated in function of the behavior of the recipient during the connection with the server, or in function of user habits or in function of data communicated by a third party.

19. The method of distributing digital video sequences according to at least one of the preceding claims **characterized in that** it comprises a preliminary stage of analog/digital conversion in a structured format, the method being applied to an analog video signal.

20. A system for distributing digital video sequences comprising a server containing means of broadcasting a modified stream according to claim 1, and a plurality of devices equipped with a descrambling circuit, **characterized in that** the server contains in addition means to record the digital profile of the recipient and analyzing means for the profile of each recipient of the modified stream, the record means commanding the nature of the complementary information transmitted to each of the analyzed recipients.

21. The system for distributing digital video sequences according to claim 20, **characterized in that** the level (quality, quantity, type) of the complementary information is determined for each recipient in function of the status of a profile at the time of the visualization of the main stream.

## Patentansprüche

1. Verfahren zum Senden, an einen Empfänger, von digitalen Videosequenzen in Form eines decodierten Flusses, ausgehend von einem originalen Fluss in einem vorgegebenen üblichen Format, wobei der originale Fluss Datensequenzen umfasst, die digitale Bilder enthalten, wobei das Verfahren folgende Phasen umfasst:
- Abänderung mindestens eines Teils der besagten Datensequenzen, wobei die Abänderungsphase einen veränderten Fluss im selben Nennformat wie der originale Fluss produziert sowie eine Zusatzinformation mit den digitalen Informationen, die die Rekonstruktion des genannten originalen Flusses ermöglicht;
- Übertragung des genannten veränderten Flusses; und
- Konstruktion des genannten decodierten Flusses mit Hilfe eines Decoders;
**gekennzeichnet dadurch, dass**:
- besagte Zusatzinformation in einer Vielzahl von Schichten aufgebaut ist, wodurch die adaptative und fortschreitende Rekonstruktion des genannten decodierten Flusses möglich wird;
- besagte Konstruktionsphase des genannten decodierten Flusses adaptativ und fortschreitend ist, wobei der decodierte Fluss ausgehend vom veränderten Fluss unter Benutzung einer Untereinheit der Zusatzinformation konstruiert wird, die mindestens eine Schicht der Zusatzinformation umfasst; wobei das Verfahren eine Phase umfasst, die darin besteht, die Untereinheit der Zusatzinformation gemäß den Informationen zu bestimmen, die von einem digitalen Profil des Empfängers stammen.

2. Verfahren zum Senden von digitalen Videosequenzen nach Anspruch 1, **gekennzeichnet dadurch, dass**
- die Übertragungsphase die Übertragung der genannten Untereinheit der Zusatzinformation oder der vollständigen Zusatzinformation an den Empfänger umfasst.

3. Verfahren zum Senden von digitalen Videosequenzen nach Anspruch 2,
**gekennzeichnet dadurch, dass** der veränderte Hauptfluss vor der Übertragung der Zusatzinformation an die Empfängereinrichtung auf der Empfängereinrichtung registriert wird.

4. Verfahren zum Senden von digitalen Videosequenzen nach Anspruch 2, **gekennzeichnet dadurch, dass** der veränderte Hauptfluss und die Zusatzinformation zusammen in Echtzeit übertragen werden.

5. Verfahren zum Senden von digitalen Videosequenzen nach mindestens einem der Ansprüche 2 bis 4, **gekennzeichnet dadurch, dass** die Ermittlung der genannten Untereinheit durch eine Methode der granularen Skalierbarkeit erfolgt.

6. Verfahren zum Senden von digitalen Videosequenzen nach mindestens einem der Ansprüche 2 bis 5, **gekennzeichnet dadurch, dass** die Informationsmenge in der besagten Untereinheit einem Skalierbarkeitsniveau entspricht, das je nach dem Profil des Empfängers festgelegt wird.

7. Verfahren zum Senden von digitalen Videosequenzen nach mindestens einem der Ansprüche 2 bis 5, **gekennzeichnet dadurch, dass** die Art der Informationen in besagter Untereinheit einem Skalierbarkeitsniveau entspricht, das je nach dem Profil des Empfängers festgelegt wird.

8. Verfahren zum Senden von digitalen Videosequenzen nach einem beliebigen der Patentansprüche 2 bis 7, **gekennzeichnet dadurch, dass** besagte Abänderungs-Zusatzinformation mindestens eine digitale Routine umfasst, die fähig ist, eine Funktion auszuführen.

9. Verfahren zum Senden von digitalen Videosequenzen nach Anspruch 8, **gekennzeichnet dadurch, dass** besagte Funktionen, die an jeden Empfänger übertragen werden, für jeden Empfänger je nach der Sitzung personalisiert werden.

10. Verfahren zum Senden von digitalen Videosequenzen nach einem beliebigen der Patentansprüche 2 bis 9, **gekennzeichnet dadurch, dass** besagte Zusatzinformation in mindestens zwei Untereinheiten aufgeteilt ist.

11. Verfahren zum Senden von digitalen Videosequenzen nach Anspruch 10, **gekennzeichnet dadurch, dass** besagte Untereinheiten der Zusatzinformation durch verschiedene Medien verteilt werden können.

12. Verfahren zum Senden von digitalen Videosequenzen nach Anspruch 10, **gekennzeichnet dadurch, dass** besagte Untereinheiten der Zusatzinformation durch dieselben Medien verteilt werden können.

13. Verfahren zum Senden von digitalen Videosequenzen nach mindestens einem der Ansprüche 2 bis 12, **gekennzeichnet dadurch, dass** mindestens ein Teil der Zusatzinformation auf einem physikalischen Vektor übertragen wird.

14. Verfahren zum Senden von digitalen Videosequenzen nach mindestens einem der Ansprüche 2 bis 12, **gekennzeichnet dadurch, dass** die Zusatzinformation online übertragen wird.

15. Verfahren zum Senden von digitalen Videosequenzen nach einem der vorhergehenden Ansprüche, **gekennzeichnet dadurch, dass** besagte digitale Bilder 1-Bilder oder P-Bilder oder B-Bilder sind.

16. Verfahren zum Senden von digitalen Videosequenzen nach einem der vorhergehenden Ansprüche, **gekennzeichnet dadurch, dass** besagte digitale Bilder Technologien auf der Grundlage von Wavelets benutzen.

17. Verfahren zum Senden von digitalen Videosequenzen nach einem der vorhergehenden Ansprüche, **gekennzeichnet dadurch, dass** mindestens ein Teil des genannten Profils auf einer Einrichtung des Empfängers gespeichert wird.

18. Verfahren zum Senden von digitalen Videosequenzen nach einem beliebigen der Patentansprüche 2 bis 15, **gekennzeichnet dadurch, dass** die Art der Information in besagter Untereinheit nach einem der folgenden Parameter aktualisiert wird: dem Verhalten des Empfängers während der Verbindung zum Server, seinen Gewohnheiten und Daten, die von einem Dritten mitgeteilt werden.

19. Verfahren zum Senden von digitalen Videosequenzen nach einem beliebigen der vorherigen Ansprüche, **gekennzeichnet dadurch, dass** es eine vorhergehende Analog-/Digital-Umwandlungsphase unter einem strukturierten Format umfasst, wobei das Verfahren auf ein analoges Videosignal angewendet wird.

20. System zum Senden von digitalen Videosequenzen mit einem Server, der Mittel umfasst, um einen veränderten Fluss nach Anspruch 1 zu verbreiten, und einer Vielzahl von Einrichtungen, die mit einer Entschlüsselungsschaltung versehen sind, **gekennzeichnet dadurch, dass** der Server außerdem ein Aufzeichnungsmittel für das digitale Profil jedes Empfängers umfasst sowie ein Analysemittel des Profils jedes Empfängers eines veränderten Flusses, wobei besagtes Mittel die Art der Zusatzinformation bestimmt, die an jede der analysierten Empfänger übertragen wird.

21. System zum Senden von digitalen Videosequenzen nach Anspruch 20, **gekennzeichnet dadurch, dass** das Niveau (Qualität, Menge, Art) der Zusatzinformation für jeden Empfänger je nach dem Zustand seines Profils zum Zeitpunkt der Anzeige des Hauptflusses festgelegt wird.
